# EUROPEAN PATENT SPECIFICATION

(11) **EP 2 736 152 B1**
(45) Date of publication and mention of the grant of the patent: **14.10.2020**
(21) Application number: 12815158.6
(22) Date of filing: 13.07.2012
(51) Int. Cl.: H02K 9/19, H02K 5/173, H02K 9/20

(54) **ELECTRIC MOTOR AND TURBO COMPRESSOR**
ELEKTROMOTOR UND TURBOVERDICHTER
MOTEUR ÉLECTRIQUE ET TURBOCOMPRESSEUR

(30) Priority: 21.07.2011 JP 2011159641
(43) Date of publication of application: 28.05.2014
(73) Proprietor: Daikin Industries, Ltd., Osaka-shi, Osaka 530-8323 (JP)
(72) Inventor: ODA, Kentarou, Tokyo 135-8710 (JP); SAKUMA, Nobuyoshi, Tokyo 135-8710 (JP); YOSHINAGA, Seiichiro, Tokyo 135-8710 (JP)
(74) Representative: Carpmael, Robert Maurice Charles
(86) International application number: PCT/JP2012/067914
(87) International publication number: WO 2013/011939

(56) References cited:
- DE-A1- 2 145 126
- JP-A- 408 019 219
- JP-A- 2003 324 901
- JP-A- 2009 017 700
- JP-U- H0 636 363
- JP-U- 52 123 610
- US-A- 3 158 009
- US-A- 3 217 193
- US-A1- 2005 285 457
- US-A1- 2011 148 229

## Description

The present invention relates to an electrical motor that includes a rotor and a stator provided around the rotor to cool the stator by liquid coolant, and to a turbo compressor using the electrical motor.

Conventionally, known is an electrical motor whose inside is cooled by using liquid coolant (refrigerant) in order to prevent burnouts of coils or insulating materials and thermal deformation of its rotor caused by temperature increase of its start or its rotor at a long time operation of the electrical motor. A Patent Document 1 listed below discloses an electrical motor in which refrigerant liquid is supplied to an inside of its rotating cylindrical bottomed rotor. In this electrical motor, the rotor is cooled by vaporization heat of the refrigerant liquid. In addition, a Patent Document 2 listed below discloses an electrical motor in which a refrigerant supply amount is controlled. In this electrical motor, excessive cooling and lubrication failure caused by mixture of refrigerant liquid into lubrication oil can be prevented by controlling the refrigerant supply amount. Patent Document 3 discloses a closed refrigerant system circulating refrigerant where an evaporator holds liquid and vaporous refrigerant at a pressure less than the condenser pressure, where the saturated liquid is injected through a liquid atomizing nozzle to form a stream of droplets which is directed into a central chamber about the motor shaft. Patent Document 4 discloses reducing the size of a rotating electric machine by making the refrigerant, not the outside air, circulate throughout the rotating electric machine for cooling. Patent Document 5 discloses an electric machine having spray and sump cooling. Patent Document 6 discloses an electrical machine with oil spray cooling where the cooling is simplified by the providing spray holes on each side of the machine on the inside of the cooling circuit, where the coolant emerges through these apertures to cool both the stator and the winding heads and the rotor. Patent Document 7 discloses a closed refrigerant system circulating refrigerant similar to Patent Document 2, where the additional technical features include a diffuser arranged to redirect the cooling liquid steam of droplets into a swirling stream to impinge against heated rotor surfaces. Patent Document 8 describes an electric motor with a spray nozzle in the motor case, to spray liquid coolant towards the rotor coil end, both in the rotation direction of the rotor and in the opposite direction.

### Related Art Documents:

Patent Document 1: Japanese Patent Application Publication No. 2009-118693,
Patent Document 2: Japanese Patent Application Publication No. 2009-300008,
Patent Document 3: US 3 158 009 A,
Patent Document 4: JP 1980 019219,
Patent Document 5: US 2011/148229 A1,
Patent Document 6: DE 21 45 126 A1,
Patent Document 7: US 3 217 193 A
Patent Document 8: Japanese Patent Application No. 2009-17700 A

### SUMMARY OF INVENTION

### Problems to be solved by the invention

In the above electrical motors, the rotor is cooled, but the stator is not cooled sufficiently. Refrigerant liquid that isn't vaporized at the rotor falls over the stator while it drips down to a drain, and the stator is cooled only by this refrigerant liquid. Especially in the electrical motor disclosed by the Patent Document 1, a coil end on a bottom side of the rotor is cooled only by heat conduction, so that it can't be cooled sufficiently. Therefore, burnout possibility of the electrical motor cannot be resolved.

An object of the present invention is to provide an electrical motor that can cool a coil end (s) of a stator coil sufficiently.

A first aspect of the present invention provides an electrical motor according to claim 1. Further aspects are defined by appended dependent claims 2-7.

### BRIEF DESCRIPTION OF DRAWINGS

**[****Fig. 1****]** It is a block diagram of a refrigeration cycle including an electrical motor (a turbo compressor) according to a first embodiment.
**[****Fig. 2****]** It is a side view of the electrical motor.
**[****Fig. 3****]** It is a cross-sectional view taken along a line III-III shown in Fig. 2.
**[****Fig. 4****]** It is a cross-sectional view taken along a line IV-IV shown in Fig. 3.
**[****Fig. 5****]** It is a plan view of a nozzle in the electrical motor.
**[****Fig. 6****]** It is a cross-sectional view taken along a line VI-VI shown in Fig. 5.
**[****Fig. 7****]** It is a block diagram of a refrigeration cycle including an electrical motor (a turbo compressor) according to a second embodiment.
**[****Fig. 8****]** It is a vertical cross-sectional view of the electrical motor.
**[****Fig. 9****]** It is a cross-sectional view taken along a line IX-IX shown in Fig. 8.

### DESCRIPTION OF EMBODIMENT

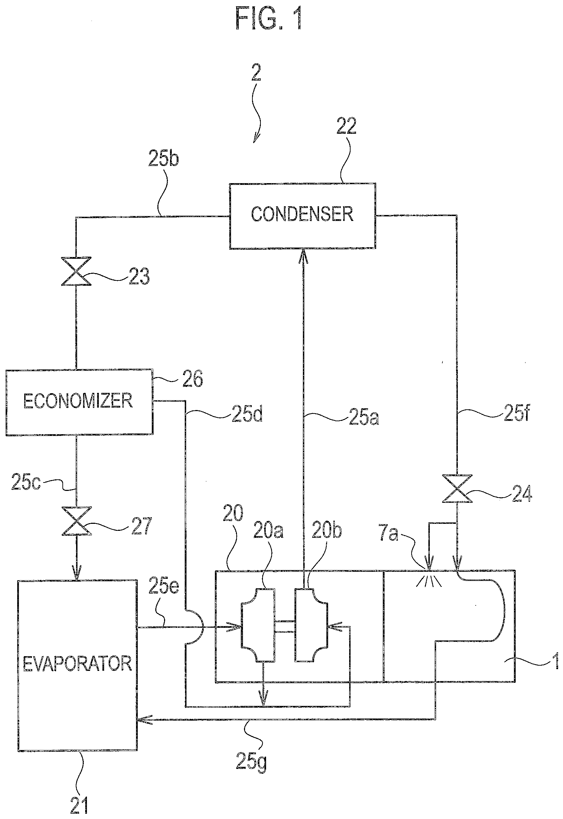

Hereinafter, embodiments will be explained with reference to the drawings. First, an electrical motor 1 (a turbo compressor 20) according to a first embodiment will be explained with reference to Fig. 1 to Fig. 6.

As shown in Fig. 1, the electrical motor 1 is provided as a drive source for a turbo compressor 20 in a refrigeration cycle of a turbo refrigerator 2. The turbo refrigerator 2 is an apparatus for preparing coolant for air conditioning. The turbo refrigerator 2 includes an evaporator 21, a condenser 22 and an economizer 26. These components are connected with each other by refrigerant pipes 25a to 25e to circulate refrigerant (cooling fluid: chlorofluorocarbon).

The condenser 22 is connected with the compressor 20 via a flow path 25a, and connected with the economizer 26 via a flow path 25b on which an expansion valve (pressure reducer) 23 is provided. Refrigerant gas compressed by the compressor 20 is supplied to the condenser 22 through the flow path 25a. The condenser 22 condenses the compressed refrigerant gas into refrigerant liquid (some remains as refrigerant gas). The refrigerant liquid condensed by the condenser 22 (or refrigerant in a gas-liquid mixed state) is decompressed by the expansion valve 23 through the flow path 25b, and then supplied to the economizer 26.

The economizer 26 is connected with the evaporator 21 via a flow path 25c on which an expansion valve (pressure reducer) 27 is provided, and connected with the compressor 20 via a flow path 25d. The economizer 26 temporarily accumulates the refrigerant liquid (part thereof is refrigerant gas) decompressed by the expansion valve (pressure reduction valve) 23 on the flow path 25c. Gas-phase component (refrigerant gas) of the refrigerant liquid (gas-liquid mixed state) accumulated by the economizer 26 is supplied to a second compression stage (second impeller) 20b of the compressor 20 via the flow path 25d. On the other hand, liquid-phase component of the refrigerant liquid (gas-liquid mixed state) accumulated by the economizer 26 is decompressed by the expansion valve 27 on the flow path 25c, and then supplied to the evaporator 21.

The evaporator 21 is connected with a first compression stage (first impeller) 20a of the compressor 20 via a flow path 25e. The evaporator 21 evaporates the refrigerant liquid decompressed by the expansion valve 27 on the flow path 25c into refrigerant gas. The refrigerant gas evaporated by the evaporator 21 is supplied to the first compression stage 20a of the compressor 20 via the flow path 25e.

The compressor 20 is connected with the condenser 22 via the flow path 25a, and has the first compression stage 20a and the second compression stage 20b that are explained above. The compressor 20 compresses the refrigerant gas supplied via the flow path 25e by the first compression stage 20a and then discharges it to the flow path 25d, and concurrently compresses the refrigerant gas supplied via the flow path 25d(containing the refrigerant gas discharged from the first
compression stage 20a) by the second compression stage 20b and then discharges it to the flow path 25a. The refrigerant gas compressed by the compressor 20 is supplied to the condenser 22 via the flow path 25a. The coolant for air conditioning is
cooled by heat-exchanging with the refrigerant at the evaporator 21.

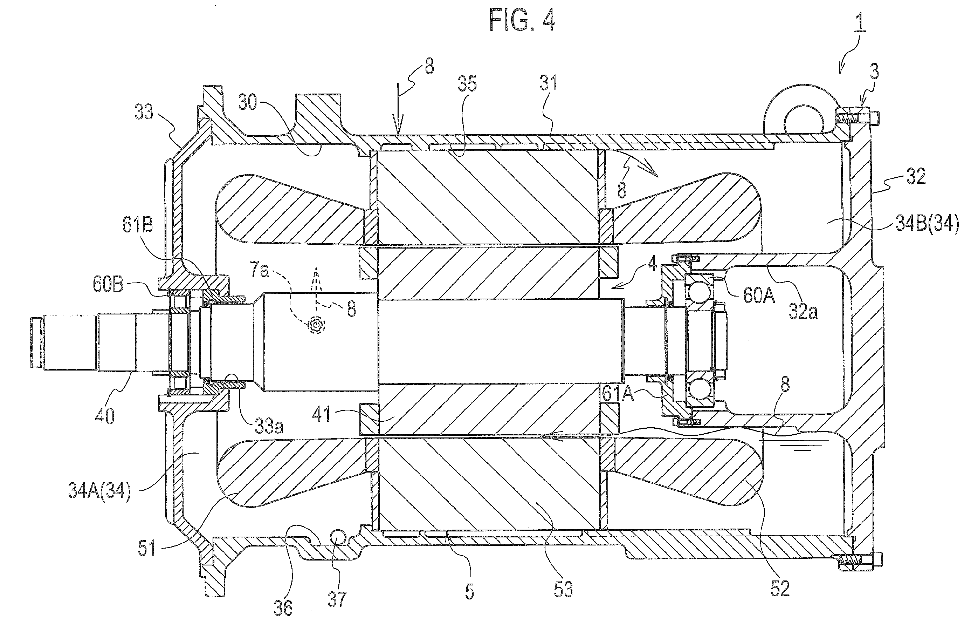

The turbo refrigerator 2 in the present embodiment includes, in addition to the above-explained refrigeration cycle, a cooling system for the electrical motor 1 that utilizes
the refrigerant of the refrigeration cycle. The refrigerant liquid (or the refrigerant in a gas-liquid mixed state) condensed by the condenser 22 is supplied to the electrical motor 1 via a flow path 25f. On the flow path 25f, a supply amount of the refrigerant liquid to the electrical motor 1 is
controlled by a regulator 24 (such as a flow control valve and an orifice). The refrigerant liquid supplied to the electrical motor 1 cools the electrical motor 1, and then is returned to the evaporator 21 (the refrigeration cycle), In the electrical motor 1, part of the refrigerant liquid circulates around a stator 5 (see Fig. 4), and remaining part thereof is sprayed
to an inside of the electrical motor 1 from an after-explained first spray nozzle 7a.

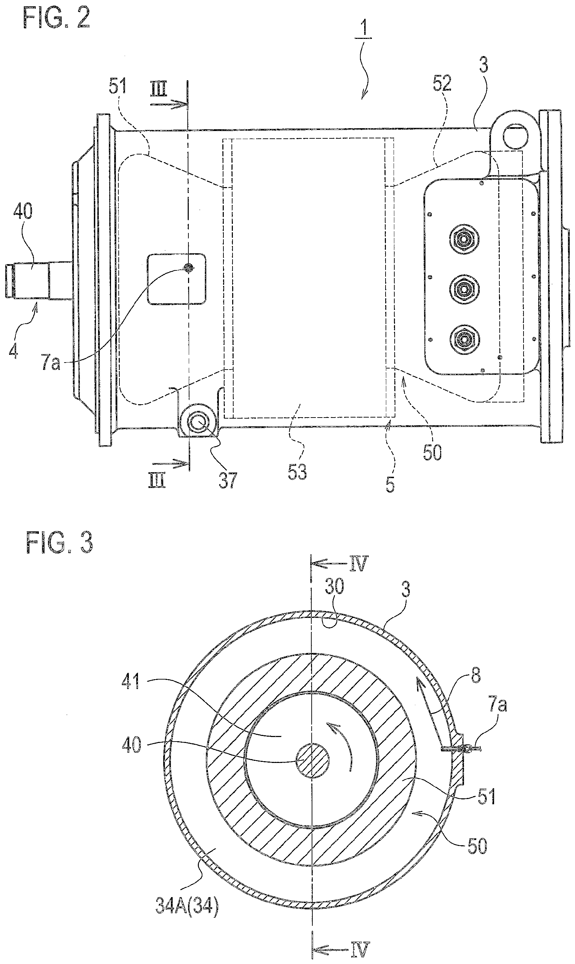

The electrical motor 1 will be explained in detail. As shown in Fig. 2 to Fig. 4, the electrical motor 1 includes a die-cast motor case 3, a rotor 4 rotatable about a rotor shaft 40, and a stator 5 provided around the rotor 4.

The motor case 3 is configured of a cylindrical circumferential wall 31, and an end wall 32 and a pass-through wall 33 that close both ends of the circumferential wall 31, respectively. An inner chamber 34 is formed within the motor case 3 (the circumferential wall 31, the end wall 32 and the pass-through wall 33). The stator 5 is fixed with an inner surface of the circumferential wall 31. A support cylinder 32a is protruded from the center of the end wall 32 toward the inner chamber 34. A ball bearing 60A and a labyrinth seal 61A are provided at an end of the support cylinder 32a. On the other hand, a cylindrical hole 33a is formed at the center of the pass-through wall 33. A roller bearing 60B and a labyrinth seal 61B are provided at the cylindrical hole 33a. The ball bearing 60A and the roller bearing 60B support the rotor shaft 40 rotatably.

The inner chamber 34 is segmented, by the rotor 4 and the stator 5, into a first chamber 34A located on one side (left side in Fig. 4) of the rotor 4 and the stator 5, and a second chamber 34B located on another side (right side in Fig. 4) thereof. As shown in Fig. 3 and Fig. 4, a first spray nozzle 7a for spraying refrigerant liquid 8 toward an inner circumferential surface 30 of the first chamber 34A is provided on the motor case 3. The first spray nozzle 7a is disposed along a radial direction of the motor case 3 toward a first coil end 51 protruded into the first chamber 34A. The first spray nozzle 7a will be explained later in detail. Note that, in Fig. 4, the first spray nozzle 7a is indicated by dotted lines, because it locates on a near side from a cross-sectional plane.

The stator 5 includes a cylindrical stator core 53
in which plural magnetic steel sheets are stacked and a stator coil 50 wound around teeth of the stator core 53. An insulation coating such as varnish is formed on a surface of the stator coil 50. In addition, the stator coil 50 has a first coil end 51 protruded into the first chamber 34A along an axial direction of the rotor shaft 40, and a second coil end 52 protruded into the second chamber 34B along the axial direction of the rotor shaft 40.

The rotor 4 includes a rotor shaft 40, a cylindrical rotor core 41 in which plural magnetic steel sheets are stacked, and a rotor coil wound around the rotor core 41. The rotor shaft 40 penetrates the rotor core 41, and is fixed with the rotor core 41. In addition, the rotor 4 is disposed within the stator 5, and rotatably supported by the end wall 32 and the
pass-through wall 33 with the rotor shaft 40 and the bearings 60A and 60B interposed therebetween. Namely, the stator 5 is provided around the rotor 4 in the motor case 3.

In addition, a refrigerant flow passage 35 is provided in the electrical motor 1. The refrigerant flow
passage 35 circulates the refrigerant liquid 8 supplied from outside through the inside of the electrical motor 1. The refrigerant flow passage 35 is configured of a spiral groove formed on the inner circumferential surface 30 of the circumferential wall 31 so as to face the stator core 53. The
stator core 53 is cooled by the refrigerant liquid 8 while the refrigerant liquid 8 flows through the refrigerant flow passage 35.

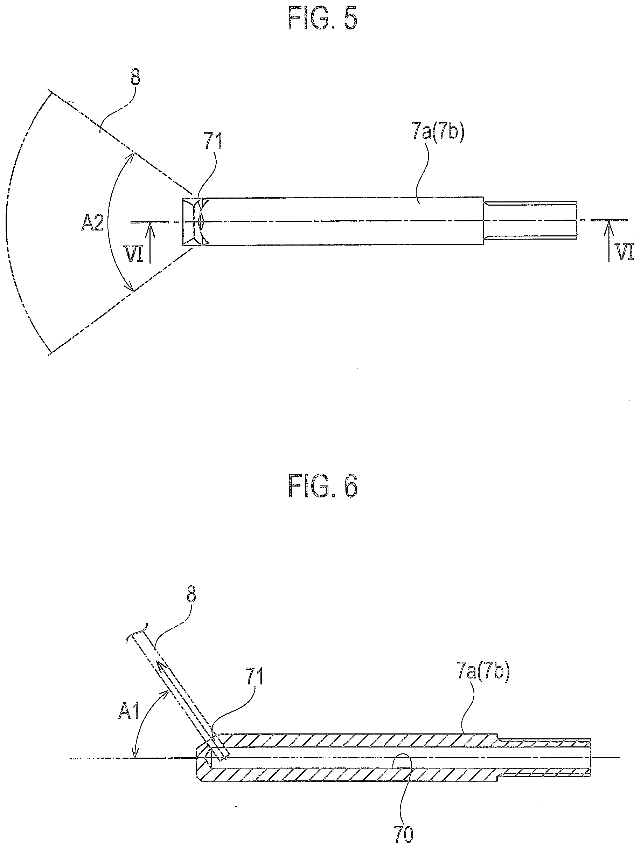

As shown in Fig. 5 and Fig. 6, the first spray nozzle 7a has, in its inside, a supply passage 70 extended along its axial direction, and an injection port 71 formed at its end as a slit. The supply passage 70 supplies, to the injection port 71, the refrigerant liquid 8 supplied from an outside of the motor case 3. The supplied refrigerant liquid 8 is sprayed out from the injection port 71 toward the inner circumferential surface 30 of the motor case 3.

As shown in Fig. 6, an open direction of the injection port 71 is set to a predetermined inclination angle A1 with respect to the axial direction of the first spray nozzle 7a. The refrigerant liquid 8 is sprayed out toward the inner circumferential surface 30 of the motor case 3 by the inclination angle A1. Here, the sprayed refrigerant liquid 8 keeps the inclination angle A1 and a thickness of its sprayed range is made almost constant. In addition, the injection port 71 of the first spray nozzle 7a is formed as the slit extended along an axial direction of the rotor shaft 40. Therefore, the sprayed refrigerant liquid 8 spreads like a fan along a plane parallel to the axial direction of the rotor shaft 40 (a central angle of the fan is a spread angle A2).

An attachment position to the motor case 3, the inclination angle A1 and the spread angle A2 of the first spray nozzle 7a are set according to a size of the electrical motor 1 and an injection pressure of the refrigerant liquid 8 so that the refrigerant liquid 8 is spread to a wide range and refrigerant mists (refrigerant droplets) 8 splashed by the internal circumferential surface 30 falls over an entire of the first coil end 51.

Cooling operations will be explained. First, cooling by the refrigerant flow passage 35 is explained with reference to Fig. 4. The refrigerant liquid 8 supplied form
an outside of the motor case 3 to the refrigerant flow passage 35 is evaporated by heat of the stator core 53 while flowing through the refrigerant flow passage 35, and thereby cools the stator core 53 by its vaporization heat. The refrigerant liquid 8 passing through the refrigerant flow passage 35 is discharged
into the second chamber 34B. The refrigerant liquid 8 discharged into the second chamber 34B falls over the second coil end 52 and vaporized by heat of the second coil end 52, and thereby cools the second coil end 52 by its vaporization heat.

Inner pressure of the second chamber 34B rises due
to the refrigeration gas 8 generated by vaporization of the refrigerant liquid 8, and the refrigeration gas 8 transfers to the low-pressure first chamber 34A through a gap between the stator core 53 and the rotor core 41. Note that part of the
refrigerant liquid (refrigerant mist) 8 discharged into the second chamber 34B and the refrigerant liquid 8 accumulated at a lower portion in the second chamber 34B also transfers to the first chamber 34A through the gap between the stator core 53 and the rotor core 41. The rotor 4 (and the stator 5) is cooled
by the refrigerant 8 along with the above-explained transfer of the refrigerant 8 from the second chamber 34B to the first chamber 34A.

Next, cooling by the first spray nozzle 7a is explained. As explained above, the second coil end 52 in the 30 second chamber 34B (and the stator 5) is cooled by the refrigerant 8 flowing through the refrigerant flow passage 35. On the other hand, the first spray nozzle 7a is provided in order to cool the first coil end 51 in the first chamber 34A by the refrigerant liquid 8. When the refrigerant liquid 8 is sprayed out from the injection port 71 of the first spray nozzle 7a toward the inner circumferential surface 30 of the first chamber 34A, the refrigerant liquid 8 is splashed by the inner circumferential surface 30 and then spread to a wide range as the refrigerant mist (refrigerant droplets) 8.

A surface pattern of a casting mold for the die-cast motor case 3 is transferred to the inner circumferential surface 30, so that the inner circumferential surface 30 has fine asperity. Therefore, the inner circumferential surface 30 can splash the refrigerant liquid 8 preferably as the refrigerant mist (refrigerant droplets) 8. The spread refrigerant mist 8 falls downward due to gravity to fall over the first coil end 51 and is vaporized by heat of the first coil end 51, and thereby cools the first coil end 51 by its vaporization heat. Note that, in order to make the refrigerant mist 8 fallen over the first coil end 51 efficiently, it is preferable that the first spray nozzle 7a (the injection port 71) is located at almost a middle position of a protrusion length of the first coil end 51.

In addition, the refrigerant liquid 8 is sprayed along a rotational direction of the rotor 4 (counter-clockwise direction in Fig. 2) from the first spray nozzle 7a (the injection port 71). A rotating flow flowing to the rotational direction is formed in the motor case 3 by rotations of the rotor 4. Therefore, the refrigerant mist 8 splashed by the inner circumferential surface 30 is carried to an entire of the first coil end 51 by the rotating flow when the refrigerant liquid is sprayed in the rotational direction of the rotor 4, so that the entire of the first coil end 51 (and other portions in the first chamber 34A) can be cooled. As a result, cooling effect to the first coil end 51 can be further improved. Note that the refrigerant liquid 8 that is sprayed from the first spray nozzle 7a and not vaporized is flows downward, and then discharged to the flow path 25g (see Fig. 1) from a drain 37 together with the refrigerant gas 8 via a groove 36 provided at a lower portion of the circumferential wall 31.

According to the electrical motor 1 in the present embodiment, the refrigerant mist 8 is generated by spraying the refrigerant liquid 8 from the first spray nozzle 7a toward the inner circumferential surface 30 to cool the first coil end 51 directly by the refrigerant mist 8. Therefore, the first coil end 51 can be cooled more sufficiently than a conventional way in which a coil end is cooled mainly by heat conduction. As a result, burnouts and seizures caused by temperature increase of the electrical motor 1 can be prevented.

In addition, the refrigerant mist 8 reaches the first coil end 51 at low speed. Therefore, the insulation coating of the first coil end 51 can be prevented from being damaged. Further, the refrigerant mist 8 can be spread to a wide range by splashing the refrigerant liquid 8 by using the inner circumferential surface 30, so that an entire of the first coil end 51 can be cooled by the refrigerant mist 8. Furthermore, since the refrigerant liquid 8 is sprayed from the injection port 71 formed as a slit and spread like a fan, the refrigerant mist 8 can be made spread to a wide range along the protrusion direction of the first coil end 51 and thereby the first coil end 51 can be cooled efficiently.

Note that, in the above embodiment, a first chamber in which the first spray nozzle 7a is provided for generating the refrigerant mist 8 to be fallen over the first coil end 51 is the first chamber 34A on an output side of a drive force of the electrical motor 1 (a side on which the rotor shaft 40 is extended out from the motor case 3: left side in Fig. 4) . However, as necessary, the first spray nozzle 7a may be provided in the chamber 34B on an opposite side to the output side of the electrical motor 1 (i.e. the chamber 34B is the first chamber). Or, the first spray nozzle for generating the refrigerant mist 8 to be fallen over the first coil end 51 may be provided in each of both chambers.

In addition, in the above embodiment, the refrigerant liquid 8 from the refrigerant flow passage 35 is discharged into the chamber (second chamber 34B) on an opposite side to the output side of the electrical motor 1. However, the refrigerant flow passage 35 may be formed so that the refrigerant liquid 8 is discharged into the chamber 34A on the output side of the electrical motor 1. In this case, since the coil end 51 in the chamber 34A on the output side is cooled by the refrigerant liquid 8 from the refrigerant flow passage 35, it is preferable that the first spray nozzle for generating refrigerant mist to be fallen over the coil end 52 (i.e. the chamber 34B is the first chamber).

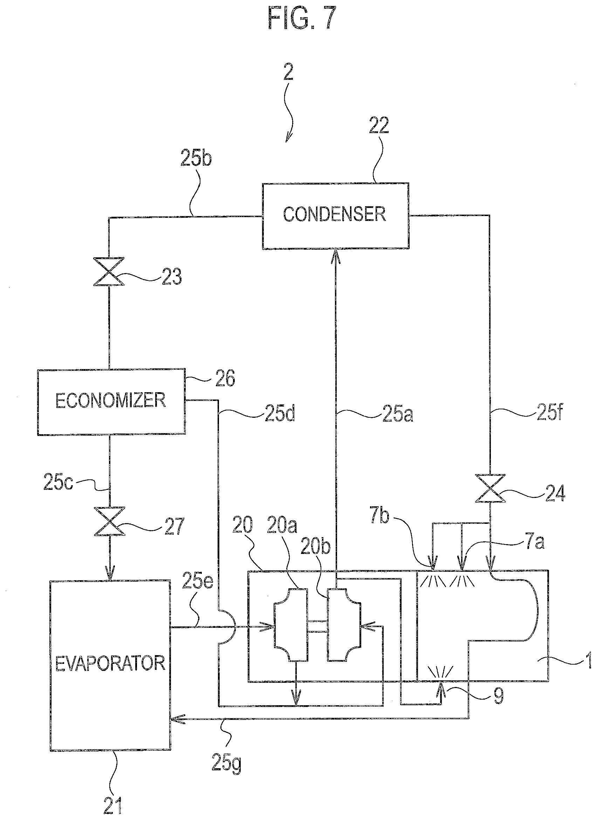

Next, an electrical motor 1 (a turbo compressor 20) according to a second embodiment will be explained with reference to Fig. 7 to Fig. 9. The present embodiment has a configuration whose cooling performance is further improved than that in the above-explained first embodiment. As shown in Fig. 7, a second spray nozzle 7b and a gas injection nozzle 9 are added to the configuration of the first embodiment in order to improve the cooling performance. Since other components are similar to those in the first embodiment, identical and equivalent components will be labeled by identical reference numbers and their redundant explanations will be omitted.

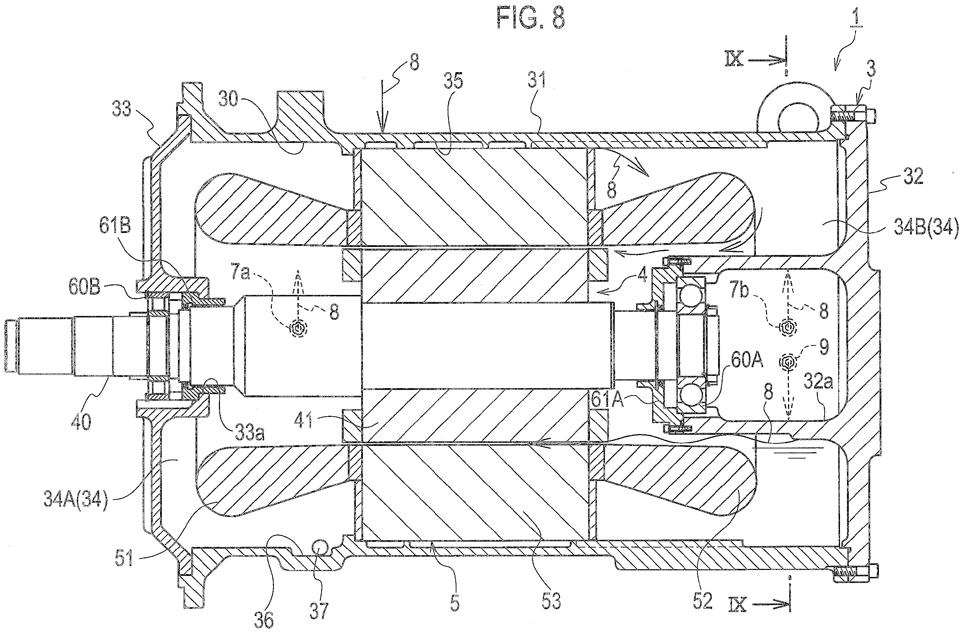

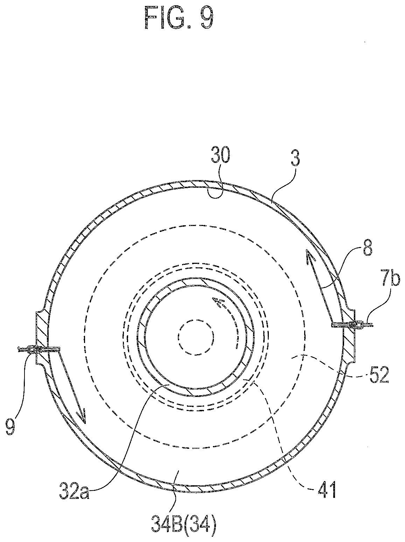

As explained above, a flow of the refrigerant 8 (refrigerant gas and refrigerant liquid) from the second chamber 34B to the first chamber 34A is generated in the inside of the motor case 3, and the rotor 4 (and the stator 5) is cooled by the flow. In the present embodiment, high-pressure gas is injected into the second chamber 34B in order to increase an amount of the flow of the refrigerant 8. In the present embodiment, as shown in Fig. 9 that is a cross-sectional view taken along a line IX-IX in Fig. 8, the gas injection nozzle 9 for injecting high-pressure gas into the second chamber 34B is provided on the motor case 3. Note that, in Fig. 8, the gas injection nozzle 9 is indicated by dotted lines, because it locates behind the support cylinder 32a.

As shown in Fig. 7, the high-pressure refrigerant gas 8 is supplied to the gas injection nozzle 9 from a downstream side of the second compression stage (second impeller) 20b of the compressor 20. Pressure of the refrigerant gas 8 on the downstream side of the second compression stage (second impeller) 20b is high in the refrigeration cycle of the turbo refrigerator 2, so that it is preferable as the high-pressure gas. In addition, since the inside of the motor case 3 is filled with the refrigerant 8, it is preferable that the high-pressure gas injected into the inside of the second chamber 34B is the identical refrigerant (high-pressure refrigerant gas) 8. Note that, although temperature of the high-pressure refrigerant gas 8 injected into the second chamber 34B is high, its injected amount is small and its temperature reduces due to its volume expansion in the second chamber 34B, and thereby it doesn't affect the cooling performance for the electrical motor 1.

Pressure in the second chamber 34B is made high by
the injection of the high-pressure refrigerant gas 8 into the second chamber 34b, so that the flow of the refrigerant 8 (refrigerant gas and refrigerant liquid) from the second chamber 34B to the first chamber 34A is made predominant. By
making the flow of the refrigerant predominant, a heat-exchanging amount between the refrigerant 8 and the rotor 4 (and the stator 5) increases and thereby the cooling performance increases.

Since configuration of the gas injection nozzle 9
is basically identical to configuration of the above-explained first spray nozzle 7a, its detailed explanations are omitted here. However, the first spray nozzle 7a injects refrigerant liquid, but the gas injection nozzle 9 injects high-pressure gas (high-pressure refrigerant gas). Therefore, a
cross-sectional area of an inner flow passage and a shape of an injection port of the gas injection nozzle 9 are optimized for high-pressure gas. For example, the injection port 71 of the first spray nozzle 7a is formed as a slit in order to spread refrigerant liquid to a wide range. On the other hand, since
an injection h of high-pressure gas from the gas injection nozzle 9 aims to make refrigerant flow in the second chamber 34B predominant, the injection port of the gas injection nozzle 9 may not be formed as a slit but as a circular hole.

In addition, in the present embodiment, for further 30 improvements of the cooling performance, the second spray nozzle 7b having an identical configuration to that of the first spray nozzle 7a is provided in order to increase the refrigerant mist 8 contained in the flow of the refrigerant 8 from the second chamber 34B to the first chamber 34A. Since vaporization heat becomes increased when the refrigerant mist 8 contained in the flow of the refrigerant 8 increases, the heat-exchanging amount between the refrigerant 8 and the rotor 4 (and the stator 5) further increases and thereby the cooling performance further improves.

As shown in Fig. 9, the second spray nozzle 7b is provided on an opposite side to the gas injection nozzle 9 with respect to the rotor shaft 40 (on the same side as the first spray nozzle 7a). The second spray nozzle 7b has an identical configuration to that of the first spray nozzle 7a (see Fig. 5 and Fig. 6), and sprays the refrigerant liquid 8 toward the inner circumferential surface 30 of the second chamber 34B. The sprayed refrigerant liquid 8 is splashed by the inner circumferential surface 30 to become the refrigerant mist 8, and then spread in the second chamber 34B. The spread refrigerant mist 8 is moved from the second chamber 34B to the first chamber 34A due to the flow of the refrigerant 8 made predominant by the refrigerant gas 8 (high-pressure gas) injected from the gas injection nozzle 9, and thereby exchanges heats with the rotor 4 (and the stator 5) to improve the cooling performance.

Here, the second spray nozzle 7b also spray the refrigerant liquid 8 along the rotational direction of the rotor 4 (counter-clockwise direction in Fig. 9). Since the rotating flow is formed along the rotational direction of the rotor 4 in the motor case 3 as explained above, the generated refrigerant mist 8 is agitated by the rotating flow when the refrigerant liquid 8 is sprayed in the rotational direction of the rotor 4 and thereby it becomes easily contained in the flow of the refrigerant 8 from the second chamber 34B to the first chamber 34A.

Further, the gas injection nozzle 9 also injects
the refrigerant gas 8 (high-pressure gas) along the rotational direction of the rotor 4. Therefore, the rotating flow is made predominant, and thereby the generated refrigerant mist 8 is further agitated. As a result, the refrigerant mist 8 becomes easily contained in the flow of the refrigerant 8 from the second chamber 34B to the first chamber 34A further. In addition, since the refrigerant mist 8 is spread further uniformly, an entire of the rotor 4 can be cooled. Note that the refrigerant
8 discharged from the refrigerant flow passage 35 is also spread due to the predominant rotating flow by the gas injection nozzle 9 and thereby the second coil end 52 can be also cooled effectively.

Here, it is preferable that the gas injection nozzle
9 is configured to inject the refrigerant gas 8 (high-pressure gas) toward an outside from an end edge of the second coil end 52 (outer side from its protrusion: right side in Fig. 8) in order to generate the flow of the refrigerant 8 from the second chamber 34B toward an inside of the second coil end 52 effectively.
By effectively generating the flow of the refrigerant 8 from the second chamber 34B toward the inside of the second coil end 52, the flow amount of the refrigerant 8 from the second chamber 34B to the first chamber 34A can be increased effectively.

In addition, the gas injection nozzle 9 is configured to inject the refrigerant gas 8 (high-pressure gas) toward the outside from the end edge of the second coil end 52, so that prevented can be damages of the insulation coating of the second coil end 52 caused by the refrigerant gas 8 (high-pressure gas) injected from the gas injection nozzle 9. Note that, in the present embodiment, the gas injection nozzle 9 itself is disposed outside the end edge of the second coil end 52 (at a position of the cross-sectional plane IX-IX in Fig. 8).

As explained above, in order to make the generated refrigerant mist 8 fallen over the first coil end 51 efficiently, it is preferable that the first spray nozzle 7a is located at almost the middle position of a protrusion length of the first coil end 51. On the other hand, principal purpose of the second spray nozzle 7b is spreading the generated refrigerant mist 8 in the second chamber 34B in order to make it contained into the flow of the refrigerant 8 from the second chamber 34B to the first chamber 34A. Therefore, in the present embodiment, the second spray nozzle 7b is disposed, along the axial direction of the rotor shaft 40, at the same position as the gas injection nozzle 9 (at the position of the cross-sectional plane IX-IX in Fig. 8).

However, since the refrigerant mist 8 generated by the second spray nozzle 7b can be sufficiently spread into the second chamber 34B by being splashed by the inner circumferential surface 30, it may be disposed inside the end edge of the second coil end 52. In addition, part of the refrigerant mist 8 generated by the second spray nozzle 7b may be made fallen over the second coil end 52 to cool the second coil end 52.

Note that, in the present embodiment, the refrigerant gas 8 as high-pressure gas injected from the gas injection nozzle 9 is taken from a downstream side of the second compression stage (second impeller) 20b of the compressor 20. However, if pressure is sufficient, it may be taken from a downstream side of the first compression stage (first impeller) 20a (i.e. from an upstream side of the second compression stage 20b.

Note that the present embodiment includes all the configurations of the first embodiment, and all the advantages achieved by the first embodiment can be achieved by the present embodiment.
Further, according to the present embodiment, pipes for the gas injection nozzle 9 and the second spray nozzle 7b increases, but the cooling performance (especially, cooling of the rotor 4) can be further improved. It may be determined
in consideration of heat generation property of the electrical motor 1 whether or not the gas injection nozzle 9 and the second spray nozzle 7b are required.

## Claims

1. An electrical motor (1) comprising:
a motor case (3);
a rotor (4) that is housed in the motor case (3) and rotatable about a rotor shaft (40);
a stator (5) that is provided around the rotor (4) in the motor case (3) and configured by winding a stator coil (50) around a stator core (53); and
a first spray nozzle (7a) that is provided in the motor case (3) for spraying liquid coolant (8) toward an inner circumferential surface (30) of the motor case (3), wherein the stator coil (50) has a first coil end (51) protruded from the stator core (53) along a direction of the rotor shaft (40), and
the first spray nozzle (7a) is configured to spread the coolant (8) as mist by splashing the coolant (8) on the inner circumferential surface (30) to make the spread mist over the first coil end (51),
the first spray nozzle (7a) is configured to spray the coolant (8) in a rotational direction of the rotor (4)
**characterized in that**;
an inside of the motor case (3) is segmented into a first chamber (34A) located on one side of the rotor (4) and the stator (5) and a second chamber (34B) on another side of the rotor (4) and the stator (5),
the first coil end (51) is protruded into the first chamber (34A),
the first spray nozzle (7a) is provided in the first chamber (34A) to spray the coolant (8) into the first chamber (34A), and
the electrical motor (1) further comprises a gas injection nozzle (9) for injecting high-pressure gas into the second chamber (34B).

2. An electrical motor (1) according to claim 1, wherein the electrical motor (1) further comprises a second spray nozzle (7b) in the second chamber (34B) for spraying the liquid coolant (8) toward an inner circumferential surface (30) of the motor case (3), and
the second spray nozzle (7b) is configured to spread the coolant (8) as mist in the second chamber (34B) by splashing the coolant (8) on an inner circumferential surface (30).

3. An electrical motor (1) according to claim 2, wherein the second spray nozzle (7b) is configured to spray the coolant (8) in a rotational direction of the rotor (4).

4. An electrical motor (1) according to claim 3, wherein the gas injection nozzle (9) is configured to inject the high-pressure gas in a rotational direction of the rotor (4).

5. An electrical motor (1) according to any one of claims 2 to 4, wherein
the stator coil (51) has a second coil end (52) protruded from the stator core (53) into the second chamber (34B) along a direction of the rotor shaft (40), and
the gas injection nozzle (9) is configured to inject the high-pressure gas toward an outside from an end edge of the second coil end (52) protruded into the second chamber (34B).

6. An electrical motor (1) according to any one of claims 1 to 5, wherein the high-pressure gas is vaporized gas of the coolant (8).

7. A turbo compressor (20) for driving an impeller (20b) by the electrical motor (1) according to claim 6, wherein the high-pressure gas is the gas coolant (8) compressed by the impeller (20b).

## Patentansprüche

1. Elektromotor (1), der Folgendes umfasst:
ein Motorgehäuse (3),
einen Rotor (4), der in dem Motorgehäuse (3) untergebracht und um eine Rotorwelle (40) drehbar ist,
einen Stator (5), der um den Rotor (4) in dem Motorgehäuse (3) bereitgestellt wird und durch Wickeln einer Statorspule (50) um einen Statorkern (53) konfiguriert ist, und
eine erste Sprühdüse (7a), die in dem Motorgehäuse (3) zum Sprühen von flüssigem Kühlmittel (8) zu einer Innenumfangsfläche (30) des Motorgehäuses (3) hin bereitgestellt wird, wobei die Statorspule (50) ein erstes Spulenende (51) aufweist, das von dem Statorkern (53) entlang einer Richtung der Rotorwelle (40) vorspringt, und
die erste Sprühdüse (7a) dafür konfiguriert ist, das Kühlmittel (8) als Nebel zu sprühen, durch Spritzen des Kühlmittels (8) auf die Innenumfangsfläche (30), um zu veranlassen, dass sich der Nebel über das erste Spulenende (51) verteilt,
**dadurch gekennzeichnet, dass**: die erste Sprühdüse (7a) dafür konfiguriert ist, das Kühlmittel (8) in einer Drehrichtung des Rotors (4) zu sprühen,
**dadurch gekennzeichnet, dass**:
eine Innenseite des Motorgehäuses (3) in eine erste Kammer (34A), die auf einer Seite des Rotors (4) und des Stators (5) angeordnet ist, und eine zweite Kammer (34B) auf einer anderen Seite des Rotors (4) und des Stators (5) aufgeteilt ist,
das erste Spulenende (51) in die erste Kammer (34A) vorspringt,
die erste Sprühdüse (7a) in der ersten Kammer (34A) bereitgestellt wird, um das Kühlmittel (8) in die erste Kammer (34A) zu sprühen, und
der Elektromotor (1) ferner eine Gaseinspritzdüse (9) zum Einspritzen von Hochdruckgas in die zweite Kammer (34B) umfasst.

2. Elektromotor (1) nach Anspruch 1, wobei der Elektromotor (1) ferner eine zweite Sprühdüse (7b) in der zweiten Kammer (34B) zum Sprühen des flüssigen Kühlmittels (8) zu einer Innenumfangsfläche (30) des Motorgehäuses (3) hin umfasst, und
die zweite Sprühdüse (7b) dafür konfiguriert ist, das Kühlmittel (8) als Nebel in die zweite Kammer (34B) zu sprühen, durch Spritzen des Kühlmittels (8) auf eine Innenumfangsfläche (30).

3. Elektromotor (1) nach Anspruch 2, wobei die zweite Sprühdüse (7b) dafür konfiguriert ist, das Kühlmittel (8) in einer Drehrichtung des Rotors (4) zu sprühen.

4. Elektromotor (1) nach Anspruch 3, wobei die Gaseinspritzdüse (9) dafür konfiguriert ist, das Hochdruckgas in einer Drehrichtung des Rotors (4) zu sprühen.

5. Elektromotor (1) nach einem der Ansprüche 2 bis 4, wobei
die Statorspule (50) ein zweites Spulenende (52) aufweist, das von dem Statorkern (53) entlang einer Richtung der Rotorwelle (40) in die zweite Kammer (34B) vorspringt, und
die Gaseinspritzdüse (9) dafür konfiguriert ist, das Hochdruckgas von einer Endkante des zweiten Spulenendes (52), das in die zweite Kammer (34B) vorspringt, nach einer Außenseite hin einzuspritzen.

6. Elektromotor (1) nach einem der Ansprüche 1 bis 5, wobei das Hochdruckgas gesprühtes Gas des Kühlmittels (8) ist.

7. Turboverdichter (20) zum Antreiben eines Laufrads (20b) durch den Elektromotor (1) nach Anspruch 6, wobei das Hochdruckgas das durch das Laufrad (20b) verdichtete Gas-Kühlmittel (8) ist.

## Revendications

1. Moteur électrique (1) comprenant :
un carter moteur (3) ;
un rotor (4) qui est abrité dans le carter moteur (3) et peut tourner autour d'un arbre de rotor (40) ;
un stator (5) qui est ménagé autour du rotor (4) dans le carter moteur (3) et configuré en enroulant une bobine de stator (50) autour d'un noyau de stator (53) ; et
une première buse de vaporisation (7a) qui est ménagée dans le carter moteur (3) afin de vaporiser un fluide de refroidissement (8) liquide vers une surface circonférentielle interne (30) du carter moteur (3), dans lequel la bobine de stator (50) présente une première extrémité de bobine (51) saillant depuis le noyau de stator (53) le long d'une direction de l'arbre de rotor (40), et
la première buse de vaporisation (7a) est configurée afin de répandre le fluide de refroidissement (8) sous forme de brouillard en aspergeant le fluide de refroidissement (8) sur la surface circonférentielle interne (30) afin de répandre le brouillard sur la première extrémité de bobine (51),
**caractérisé en ce que** : la première buse de vaporisation (7a) est configurée afin de vaporiser le fluide de refroidissement (8) dans une direction de rotation du rotor (4)
**caractérisé en ce que** :
un intérieur du carter moteur (3) est segmenté en une première chambre (34A) située sur un côté du rotor (4) et du stator (5) et une seconde chambre (34B) sur un autre côté du rotor (4) et du stator (5),
la première extrémité de bobine (51) ressort dans la première chambre (34A) ;
la première buse de vaporisation (7a) est ménagée dans la première chambre (34A) afin de vaporiser le fluide de refroidissement (8) dans la première chambre (34A) ; et
le moteur électrique (1) comprend en outre une buse d'injection de gaz (9) permettant d'injecter du gaz à haute pression dans la seconde chambre (34B).

2. Moteur électrique (1) selon la revendication 1, dans lequel le moteur électrique (1) comprend en outre une seconde buse de vaporisation (7b) dans la seconde chambre (34B) afin de vaporiser le fluide de refroidissement (8) liquide vers une surface circonférentielle interne (30) du carter moteur (3), et
la seconde buse de vaporisation (7b) est configurée afin de répandre le fluide de refroidissement (8) sous forme de brouillard dans la seconde chambre (34B) en vaporisant le fluide de refroidissement (8) sur une surface circonférentielle interne (30).

3. Moteur électrique (1) selon la revendication 2, dans lequel la seconde buse de vaporisation (7b) est configurée afin de vaporiser le fluide de refroidissement (8) dans une direction de rotation du rotor (4).

4. Moteur électrique (1) selon la revendication 3, dans lequel la buse d'injection de gaz (9) est configurée afin d'injecter le gaz sous haute pression dans une direction de rotation du rotor (4).

5. Moteur électrique (1) selon l'une quelconque des revendications 2 à 4, dans lequel
la bobine de stator (51) présente une seconde extrémité de bobine (52) saillant depuis le noyau de stator (53) dans la seconde chambre (34B) le long d'une direction de l'arbre de rotor (40), et
la buse d'injection de gaz (9) est configurée afin d'injecter le gaz sous haute pression vers un extérieur depuis un bord d'extrémité de la seconde extrémité de bobine (52) saillant dans la seconde chambre (34B).

6. Moteur électrique (1) selon l'une quelconque des revendications 1 à 5, dans lequel le gaz sous haute pression est un gaz vaporisé du fluide de refroidissement (8).

7. Turbocompresseur (20) permettant d'entraîner une turbine (20b) par le moteur électrique (1) selon la revendication 6, dans lequel le gaz sous haute pression est le fluide de refroidissement (8) gazeux comprimé par la turbine (20b).
